# EUROPÄISCHE PATENTSCHRIFT

(11) **EP 2 568 259 B1**
(45) Veröffentlichungstag und Bekanntmachung des Hinweises auf die Patenterteilung: **03.04.2019**
(21) Anmeldenummer: 11007223.8
(22) Anmeldetag: 06.09.2011
(51) Int. Cl.: G01D 5/14, G01D 5/244

(54) **Encoderring und Anordnung**
Encoder ring and system
Bague d'encodage et agencement

(43) Veröffentlichungstag der Anmeldung: 13.03.2013
(73) Patentinhaber: Carl Freudenberg KG, 69469 Weinheim (DE)
(72) Erfinder: Heiland, Marc, Dr., 67549 Worms (DE)

(56) Entgegenhaltungen:
- EP-A1- 2 622 310
- DE-A1- 19 910 636
- DE-A1-102008 059 774
- DE-U1- 20 210 548

## Beschreibung

### Technisches Gebiet

Die Erfindung betrifft einen Ring nach dem Oberbegriff des Patentanspruchs 1.

### Stand der Technik

Ringe der eingangs genannten Art, sogenannte Encoderringe, sind aus dem Stand der Technik, beispielsweise aus der EP 1 674 831 A1, bereits bekannt.

Aus der DE 10 2008 059 774 A1 ist ein Encoderring bekannt, bei welchem sich die Pole entlang der Encoderspur kontinuierlich ändern.

Aus der DE19910636 A1 ist ein Ring bekannt, der mehrere magnetische Bereiche aufweist, und wobei jedes Magnetfeld eine radiale und eine axiale Magnetfeldkomponente aufweist, die zu einem Magnetfeldvektor kombinieren, welcher jeweils unter einem bestimmten Winkel gegen die Ringebene geneigt ist.

Während der Rotation einer Welle können über eine bestimmte Magnetisierung eines Rings die Drehzahl und ein Referenzpunkt der Welle erfasst werden.

Es besteht allerdings ein Bedarf nach Encoderringen, welche erlauben, die Winkelposition einer Welle bzw. deren relative Verdrehung zu einem Bezugspunkt im statischen Zustand der Welle zu erfassen.

### Darstellung der Erfindung

Der Erfindung liegt daher die Aufgabe zugrunde, den Verdrehungszustand eines rotierbaren Elements zuverlässig zu erfassen, ohne das rotierbare Element in Rotation zu versetzen.

Die vorliegende Erfindung löst die zuvor genannte Aufgabe durch die Merkmale des Patentanspruchs 1.

Ein erfindungsgemäßer Ring zur Anordnung auf einem um eine Achse rotierbaren Element umfasst einen Grundkörper, welcher einen Zentraldurchgang umfängt, der in einer Ringebene liegt, wobei der Grundkörper mehrere magnetische Bereiche aufweist, die am oder im Grundkörper angeordnet sind und jeweils ein für sie charakteristisches Magnetfeld erzeugen, und wobei jedes Magnetfeld eine radiale und eine axiale Magnetfeldkomponente aufweist, die zu einem Magnetfeldvektor kombinieren, welcher jeweils unter einem bestimmten Winkel gegen die Ringebene geneigt ist.

Erfindungsgemäß ist es vorgesehen, dass sich die Winkel, unter denen die Magnetfeldvektoren gegen die Ringebene geneigt sind, längs des Umfangs des Grundkörpers ändern.

Erfindungsgemäß ist zunächst erkannt worden, dass bei den Ringen des Stands der Technik lediglich radiale Magnetfeldkomponenten von Magnetfeldern erfasst werden. Erfindungsgemäß ist darauf erkannt worden, dass eine sich entlang des Umfangs des Rings ändernde Ausrichtung einzelner Magnetfelder erlaubt, jedem Drehwinkel, um den der Ring um eine Achse verdreht wird, eindeutige magnetische Signale zuzuweisen. Anhand dieser magnetischen Signale kann mittels eines Sensors oder Detektors der jeweilige Drehwinkel und damit der Verdrehungszustand des Rings erfasst werden. Soweit der Ring auf einem rotierbaren Element positioniert ist, ist es nicht notwendig, dieses zu rotieren, um dessen Verdrehungszustand festzustellen.

Die Winkel könnten sich kontinuierlich ändern. Hierdurch kann ein Drehwinkel oder Verdrehungszustand einer Welle mit sehr hoher Auflösung bestimmt werden.

Jedem Winkel sind n definierte Drehwinkel des Rings zugeordnet, wobei n eine ganze Zahl ist. Dies ist in allen Elektromotoren vorteilhaft, die n-polpaarig sind.

Jedem Winkel kann genau ein einzelner definierter Drehwinkel des Rings relativ zu einem Bezugspunkt zugeordnet sein. So ist jeder Drehwinkel oder Verdrehungszustand der Welle eindeutig bestimmbar.

Vor diesem Hintergrund könnten die magnetischen Bereiche einander ringsum abfolgend angeordnet sein. Hierdurch entstehen keine Stellen am Ring, die kein Signal erzeugen. Ein Magnetfeld eines magnetischen Bereichs könnte in axialer und radialer Richtung jeweils andere magnetische Signale erzeugen als das Magnetfeld des in Umfangsrichtung jeweils vorangehenden und/ oder nachfolgenden magnetischen Bereichs. Hierdurch ist sichergestellt, dass jedem Drehwinkel für ihn charakteristische magnetische Signale in Axialrichtung und Radialrichtung zugewiesen sind.

Die Magnetfeldvektoren könnten eine wendelförmige Ebene aufspannen. Hierdurch kann ein Drehwinkel oder Verdrehungszustand mit sehr hoher Auflösung bestimmt werden. Durch diese konkrete Ausgestaltung ist die jeweilige Ausrichtung eines jeden Magnetfelds abhängig vom Drehwinkel, um den der Ring relativ zu einem Referenzpunkt verdreht ist.

Jedem Winkel könnten höchstens vier definierte Drehwinkel des Rings zugeordnet sein. Dies ist in Elektromotoren vorteilhaft, da hier exakte Wellenpositionen zur Ermittlung von Schaltzeitpunkten bestimmt werden müssen.

Die Größen oder Intensitäten der radialen und der axialen Magnetfeldkomponenten könnten entlang des Umfangs relativ zueinander phasenverschoben sein. So kann durch mehrere axial oder radial angeordnete Sensoren besonders gut erfasst werden, in welcher Drehposition sich eine Welle befindet. Hierbei können die Magnetfelder immer dann in axialer Richtung am stärksten wirken, wenn sie in radialer Richtung am schwächsten ausgeprägt sind. Konkret ist hierbei denkbar, dass die von einem Sensor erfassten Intensitäten der Radialkomponenten einer Sinuskurve folgen, während die von einem Sensor erfassten Intensitäten der Axialkomponenten einer Cosinuskurve folgen. Der Sensor oder die Sensoren können so durch simultanes Erfassen einer Radialkomponente und einer Axialkomponente exakt einen diesen Komponenten zugewiesenen Drehwinkel detektieren.

Vor diesem Hintergrund könnten die Ausrichtungen der Magnetfelder sich entlang des Umfangs stufenweise oder kontinuierlich gegen die Ringebene neigen. Durch den Neigungswinkel der jeweiligen Ausrichtung eines Magnetfeldes werden unterschiedliche magnetische Felder in Axialrichtung und Radialrichtung des Rings bzw. eines rotierbaren Elements geschaffen, die von einem Sensor oder mehreren Sensoren erfasst und ausgewertet werden können.

Der Ring weist eine im Querschnitt U-förmige Ausgestaltung auf. Ein solcher Ring kann als Hohlkehlenencoder verwendet werden. Ein solcher Ring kann in der durch die U-Form geschaffenen Kuhle oder Ausnehmung einen Sensor aufnehmen. Die magnetischen Signale der Magnetfelder können so besonders gut erfasst und aufgelöst werden.

Der Grundkörper könnte ein Elastomer oder einen Thermoplasten aufweisen. In diese Werkstoffe lassen sich problemlos magnetisierbare Partikel einarbeiten. Der Grundkörper könnte aus einem Elastomer gefertigt sein. In einem Elastomer können problemlos hartmagnetische Partikel aufgenommen werden, die durch ein externes Magnetfeld magnetisiert werden können. So ist es möglich, einzelne magnetische Bereiche mit unterschiedlicher Ausrichtung derer Magnetfelder zu erzeugen.

Der Grundkörper könnte ein Metall aus weichmagnetischem oder nicht magnetischem Material aufweisen.

Eine Anordnung könnte eine rotierbare Welle und eine mit dieser drehfest verbundene Halteeinrichtung umfassen, wobei die Halteeinrichtung einen Ring nach einem der voranstehenden Ansprüche aufweist, wobei der Ring koaxial zu der Welle angeordnet und mit dieser rotierbar ist und wobei ein Sensor vorgesehen ist, welcher die magnetischen Signale der Magnetfelder erfasst. Mit einer solchen Anordnung kann der Verdrehungszustand bzw. der Drehwinkel der Welle bestimmt werden, während diese ruht. Die Halteeinrichtung ist hierbei vorzugsweise aus einem unmagnetischen Material gefertigt, um die Magnetfelder des Rings nicht zu stören.

Der hier beschriebene Ring kann überall dort eingesetzt werden, wo eine Winkelposition einer Welle auch ohne Drehbewegung erkannt oder gemessen werden soll. Insbesondere kann der Ring zur Bestimmung der Winkelposition einer Nockenwelle oder einer Kurbelwelle verwendet werden. Der Ring kann als sogenannter Encoderring verwendet werden.

### Kurzbeschreibung der Zeichnung

In der Zeichnung zeigen
- Fig. 1: eine Draufsicht auf einen Ring, dessen Grundkörper im Querschnitt U-förmig ausgebildet ist, wobei die Ausrichtungen der Magnetfelder anhand vier charakteristischer Punkte dargestellt sind,
- Fig. 2: eine Ansicht eines Vertikalschnitts des Rings gemäß Fig. 1,
- Fig. 3: eine Ansicht eines Horizontalschnitts des Rings gemäß Fig. 1,
- Fig. 4: eine Draufsicht auf den Ring gemäß Fig. 1, wobei die Ausrichtungen der Magnetfelder anhand vieler charakteristischer Punkte dargestellt sind,
- Fig. 5: eine Draufsicht auf einen Ring, dessen Grundkörper als O-Ring ausgestaltet ist, wobei die Ausrichtungen der Magnetfelder anhand vier charakteristischer Punkte dargestellt sind,
- Fig. 6: eine Ansicht eines Vertikalschnitts des Rings gemäß Fig. 5,
- Fig. 7: eine Ansicht eines Horizontalschnitts des Rings gemäß Fig. 5,
- Fig. 8: eine Draufsicht auf den Ring gemäß Fig. 5, wobei die Ausrichtungen der Magnetfelder anhand vieler charakteristischer Punkte dargestellt sind,
- Fig. 9: eine Draufsicht auf einen Ring, dessen Grundkörper im Querschnitt rechteckig ausgebildet ist, wobei die Ausrichtungen der Magnetfelder anhand vier charakteristischer Punkte dargestellt sind,
- Fig. 10: eine Ansicht eines Vertikalschnitts des Rings gemäß Fig. 9,
- Fig. 11: eine Ansicht eines Horizontalschnitts des Rings gemäß Fig. 9,
- Fig. 12: eine Draufsicht auf den Ring gemäß Fig. 9, wobei die Ausrichtungen der Magnetfelder anhand vieler charakteristischer Punkte dargestellt sind,
- Fig. 13: eine Draufsicht auf einen Ring, dessen Grundkörper im Querschnitt U-förmig ausgebildet ist, wobei der Grundkörper in einer Halteeinrichtung mit einer Nabe zum Aufschieben auf eine Welle aufgenommen ist und wobei die Ausrichtungen der Magnetfelder anhand vier charakteristischer Punkte dargestellt sind,
- Fig. 14: eine Ansicht eines Vertikalschnitts des Rings gemäß Fig. 13,
- Fig. 15: eine Ansicht eines Horizontalschnitts des Rings gemäß Fig. 13,
- Fig. 16: eine Draufsicht auf den Ring gemäß Fig. 13, wobei die Ausrichtung der Magnetfelder anhand vieler charakteristischer Punkte dargestellt sind,
- Fig. 17: eine perspektivische Ansicht eines Rings, dessen Magnetfelder anhand von sich entlang des Umfangs ändernden radialen und axialen Magnetfeldkomponenten dargestellt sind, wobei in der rechten Ansicht der Fig. 17 dargestellt ist, dass eine radiale Magnetfeldkomponente und eine axiale Magnetfeldkomponente zu einem Magnetfeldvektor kombinieren.
- Fig. 18: eine perspektivische Ansicht, in welcher schematisch dargestellt ist, dass einzelne magnetische Bereiche unterschiedlich gegen die Ringebene geneigte Magnetfeldvektoren erzeugen, die durch axiale und radiale Magnetfeldkomponenten aufgespannt werden,
- Fig. 19: eine Anordnung mit einem O-förmigen Ring, der koaxial zu einer Welle angeordnet und mit dieser drehfest verbunden ist, und
- Fig. 20: eine Anordnung mit einem U-förmigen Ring, der koaxial zu einer Welle angeordnet und mit dieser drehfest verbunden ist.

### Ausführung der Erfindung

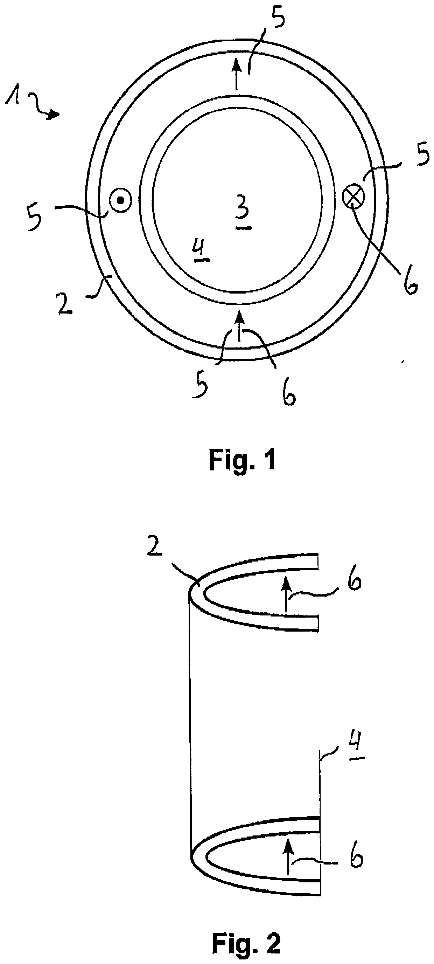

Fig. 1 zeigt einen Ring 1 zur Anordnung auf einem um eine Achse rotierbaren Element, umfassend einen Grundkörper 2, welcher einen Zentraldurchgang 3 umfängt, der in einer Ringebene 4 liegt, wobei der Grundkörper 2 mehrere magnetische Bereiche 5 aufweist, die am oder im Grundkörper 2 angeordnet sind und jeweils ein für sie charakteristisches Magnetfeld erzeugen.

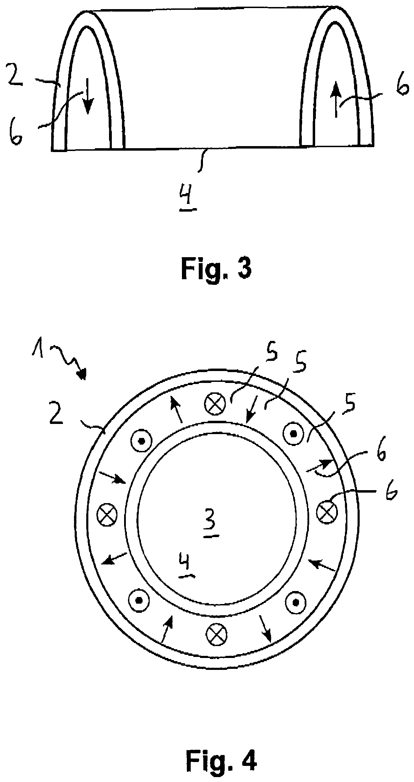

Die Fig. 2 und 3 zeigen, dass der Ring 1 im Querschnitt U-förmig ausgebildet ist und dadurch eine umlaufende Kuhle ausbildet.

Fig. 4 zeigt, dass der Ring 1 magnetische Bereiche 5 aufweist, die längs des Umfangs einander abfolgen. Das Kreuz in den Figuren symbolisiert hierbei, dass die Nordpol-Südpol-Orientierung eines Magnetfelds in die Zeichnungsebene gerichtet ist. Der Punkt symbolisiert, dass diese Orientierung aus der Zeichnungsebene heraus gerichtet ist. Die Pfeile stellen dar, dass die Orientierung in der Zeichnungsebene liegt.

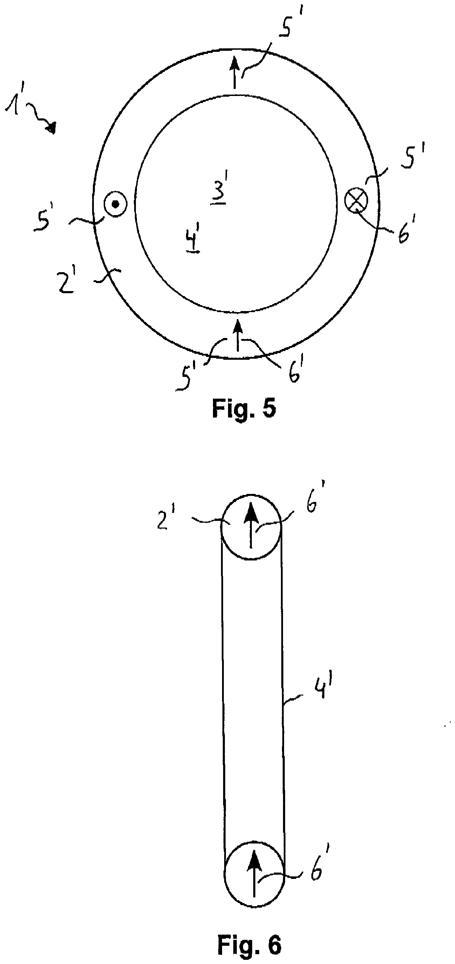

Fig. 5 zeigt einen Ring 1' zur Anordnung auf einem um eine Achse rotierbaren Element, umfassend einen Grundkörper 2', welcher einen Zentraldurchgang 3' umfängt, der in einer Ringebene 4' liegt, wobei der Grundkörper 2' mehrere magnetische Bereiche 5' aufweist, die am oder im Grundkörper 2' angeordnet sind und jeweils ein für sie charakteristisches Magnetfeld erzeugen.

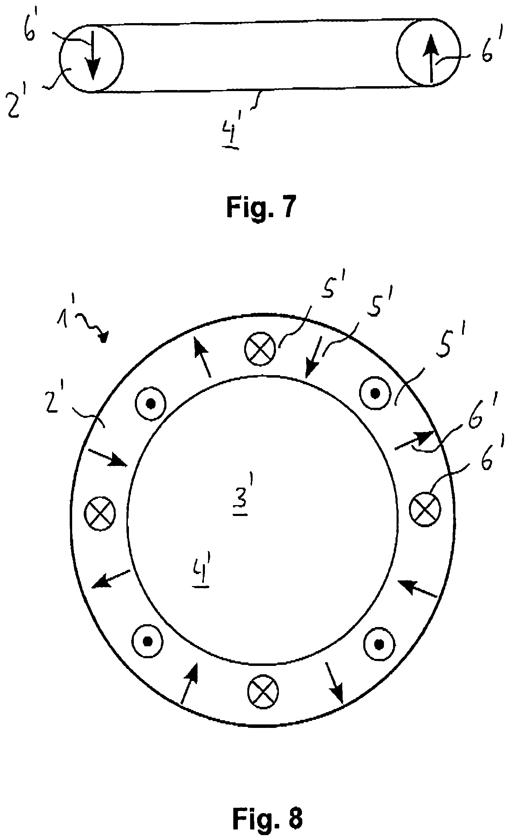

Die Fig. 6 und 7 zeigen, dass der Ring 1' als O-Ring ausgebildet ist.

Fig. 8 zeigt, dass der Ring 1' magnetische Bereiche 5' aufweist, die längs des Umfangs einander abfolgen. Das Kreuz in den Figuren symbolisiert hierbei, dass die Nordpol-Südpol-Orientierung eines Magnetfelds in die Zeichnungsebene gerichtet ist. Der Punkt symbolisiert, dass diese Orientierung aus der Zeichnungsebene heraus gerichtet ist. Die Pfeile stellen dar, dass die Orientierung in der Zeichnungsebene liegt.

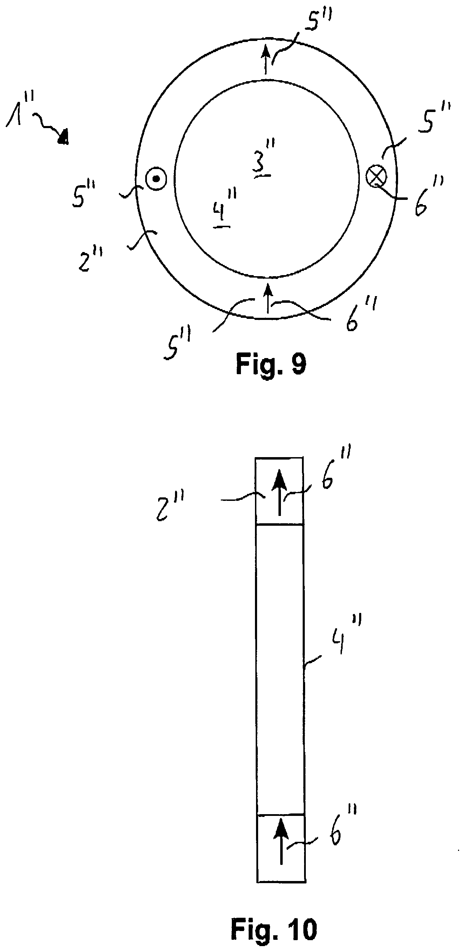

Fig. 9 zeigt einen Ring 1" zur Anordnung auf einem um eine Achse rotierbaren Element, umfassend einen Grundkörper 2", welcher einen Zentraldurchgang 3" umfängt, der in einer Ringebene 4" liegt, wobei der Grundkörper 2" mehrere magnetische Bereiche 5" aufweist, die am oder im Grundkörper 2" angeordnet sind und jeweils ein für sie charakteristisches Magnetfeld erzeugen.

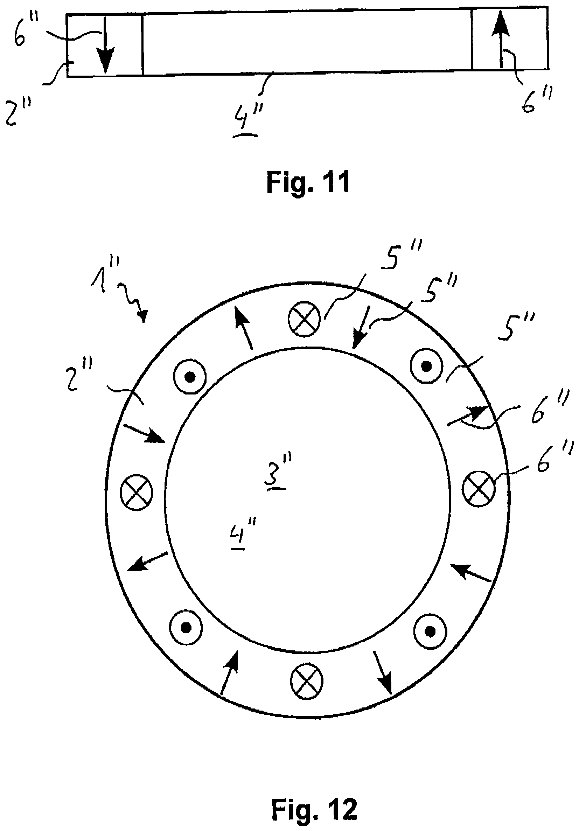

Die Fig. 10 und 11 zeigen, dass der Ring 1" im Querschnitt rechteckig, nämlich als Flachring, ausgebildet ist.

Fig. 12 zeigt, dass der Ring 1" magnetische Bereiche 5" aufweist, die längs des Umfangs einander abfolgen. Das Kreuz in den Figuren symbolisiert hierbei, dass die Nordpol-Südpol-Orientierung eines Magnetfelds in die Zeichnungsebene gerichtet ist. Der Punkt symbolisiert, dass diese Orientierung aus der Zeichnungsebene heraus gerichtet ist. Die Pfeile stellen dar, dass die Orientierung in der Zeichnungsebene liegt.

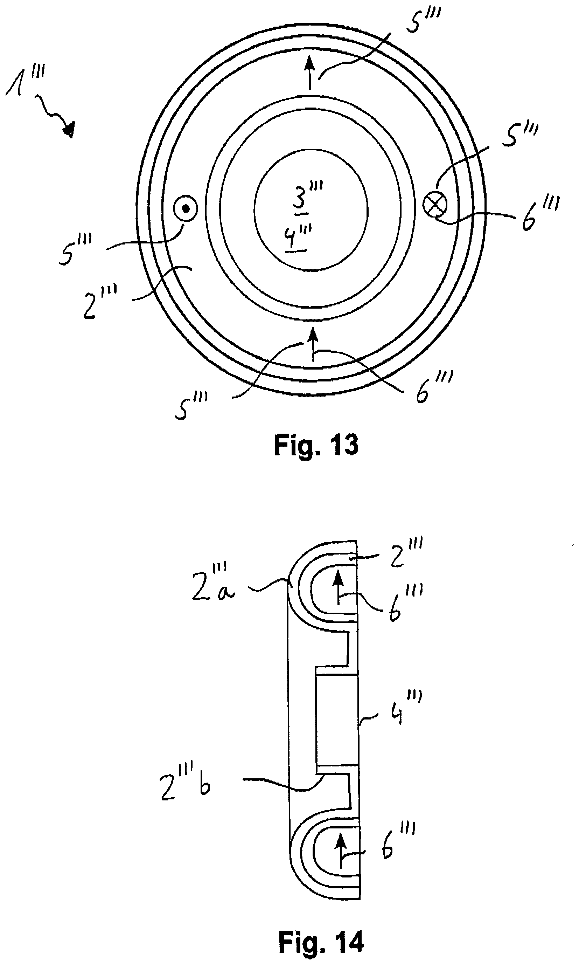

Fig. 13 zeigt einen Ring 1'" zur Anordnung auf einem um eine Achse rotierbaren Element, umfassend einen Grundkörper 2'", welcher einen Zentraldurchgang 3'" umfängt, der in einer Ringebene 4'" liegt, wobei der Grundkörper 2'" mehrere magnetische Bereiche 5'" aufweist, die am oder im Grundkörper 2'" angeordnet sind und jeweils ein für sie charakteristisches Magnetfeld erzeugen. Der Ring 1'" ist in einer Halteeinrichtung 2'"a aus Blech aufgenommen, welche am Ring 1'" mit ihrer Blechwandung anliegt. Die Halteeinrichtung 2'"a weist eine Nabe 2'"b auf, durch die eine Welle hindurch geschoben werden kann.

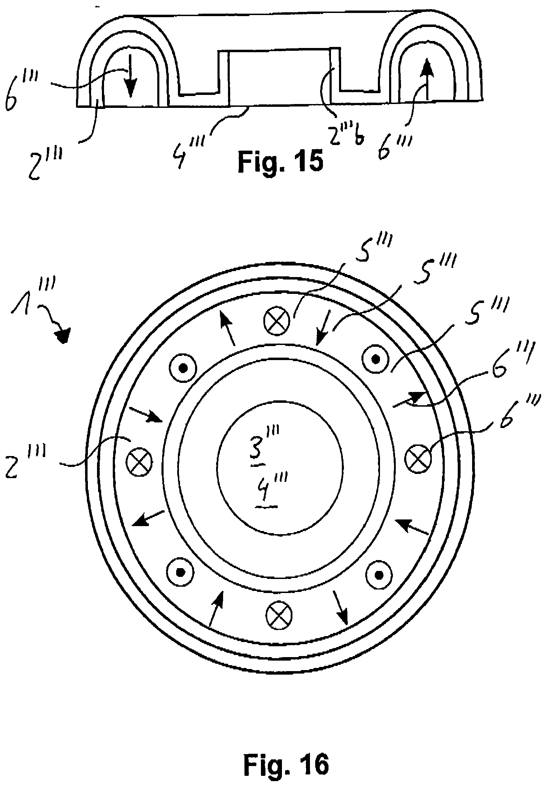

Die Fig. 14 und 15 zeigen, dass der Ring 1'" als U-förmiger Ring ausgebildet ist.

Fig. 16 zeigt, dass der Ring 1'" magnetische Bereiche 5'" aufweist, die längs des Umfangs einander abfolgen. Das Kreuz in den Figuren symbolisiert hierbei, dass die Nordpol-Südpol-Orientierung eines Magnetfelds in die Zeichnungsebene gerichtet ist. Der Punkt symbolisiert, dass diese Orientierung aus der Zeichnungsebene heraus gerichtet ist. Die Pfeile stellen dar, dass die Orientierung in der Zeichnungsebene liegt.

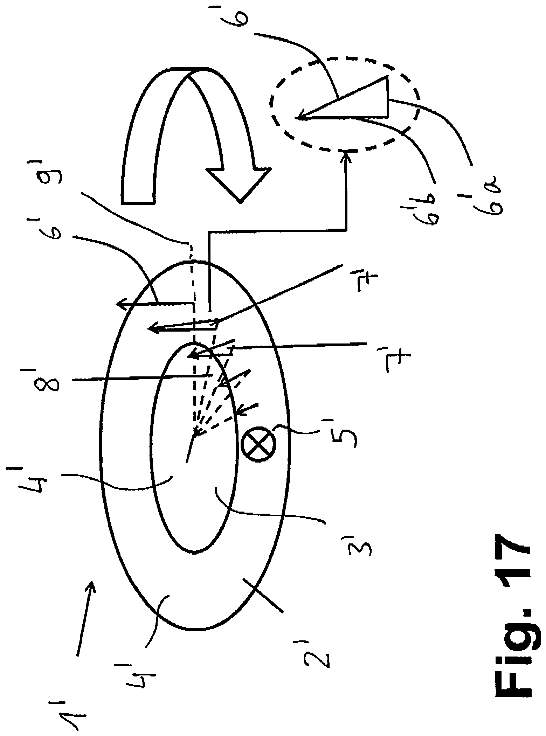

Fig. 17 zeigt einen Ring 1' zur Anordnung auf einem um eine Achse rotierbaren Element, umfassend einen Grundkörper 2', welcher einen Zentraldurchgang 3' umfängt, der in einer Ringebene 4' liegt, wobei der Grundkörper 2' mehrere magnetische Bereiche 5' aufweist, die am oder im Grundkörper 2' angeordnet sind und jeweils ein für sie charakteristisches Magnetfeld erzeugen, und wobei jedes Magnetfeld eine radiale Magnetfeldkomponente 6'a und eine axiale Magnetfeldkomponente 6'b aufweist, die zu einem Magnetfeldvektor 6' kombinieren, welcher jeweils unter einem bestimmten Winkel 7' gegen die Ringebene 4' geneigt ist.

Die Winkel 7', unter denen die Magnetfeldvektoren 6' gegen die Ringebene 4' geneigt sind, ändern sich längs des Umfangs des Grundkörpers 2',

Die Winkel 7' ändern sich kontinuierlich. Denkbar ist jedoch auch, dass sich die Winkel 7' schrittweise ändern.

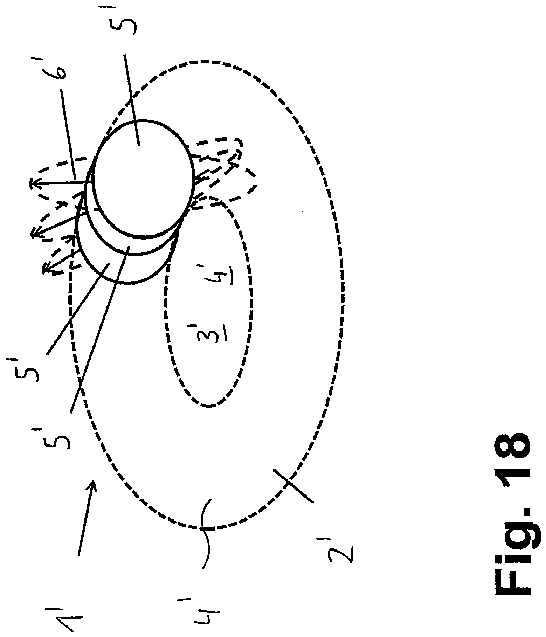

Fig. 18 zeigt, dass die magnetischen Bereiche 5' einander ringsum abfolgend angeordnet sind. Die Magnetfeldvektoren 6' spannen so eine wendelförmige Ebene auf, die sich um den Ring 1' nach Art einer Wendel legt.

Fig. 17 zeigt, dass jedem Winkel 7' genau ein einzelner definierter Drehwinkel 8' des Rings 1' relativ zu einem Bezugspunkt 9' zugeordnet ist. Die Größen oder Intensitäten der radialen Magnetfeldkomponenten 6'a und der axialen Magnetfeldkomponenten 6'b sind entlang des Umfangs relativ zueinander phasenverschoben. Die Fig. 17 und 18 zeigen einen Ring 1', dessen Grundkörper 2' eine im Querschnitt O-förmige Ausgestaltung aufweist.

Die vorgenannten physikalischen Effekte stellen sich auch bei den Ringen 1, 1', 1", 1'" gemäß den Fig. 1 bis 16 ein. Der Grundkörper 2, 2', 2", 2'" weist ein Elastomer oder einen Thermoplasten auf. Der Grundkörper 2, 2', 2", 2'" weist ein Metall aus weichmagnetischem oder nicht magnetischem Material auf.

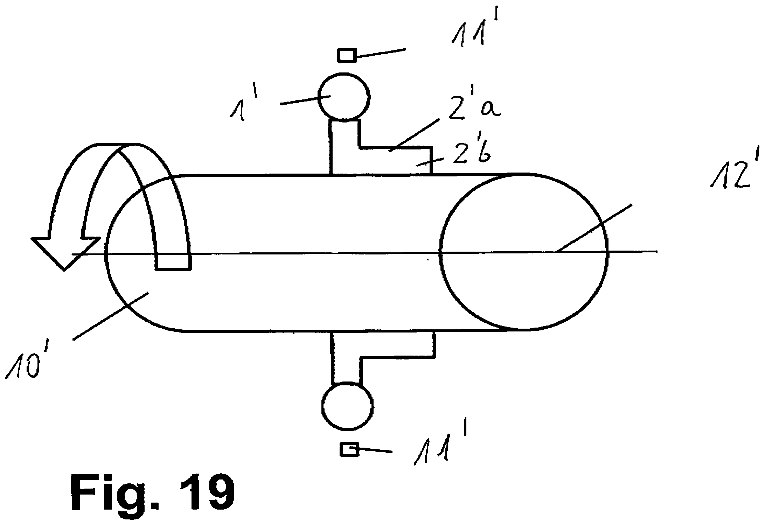

Fig. 19 zeigt eine Anordnung, umfassend eine rotierbare Welle 10' und eine mit dieser drehfest verbundene Halteeinrichtung 2'a, wobei die Halteeinrichtung 2'a einen Ring 1' aufweist, wobei der Ring 1' koaxial zu der Welle 10' angeordnet und mit dieser rotierbar ist und wobei ein Sensor 11' vorgesehen ist, welcher die magnetischen Signale der Magnetfelder erfasst. Die Welle 10' rotiert gemeinsam mit dem Ring 1' um die Achse 12'.

Die Halteeinrichtung 2'a weist eine Nabe 2'b auf, durch welche die Welle 10' hindurch ragt. Die Nabe 2'b ist auf die Welle 10' aufgepresst. Die Halteeinrichtung 2'a ist aus Blech gefertigt.

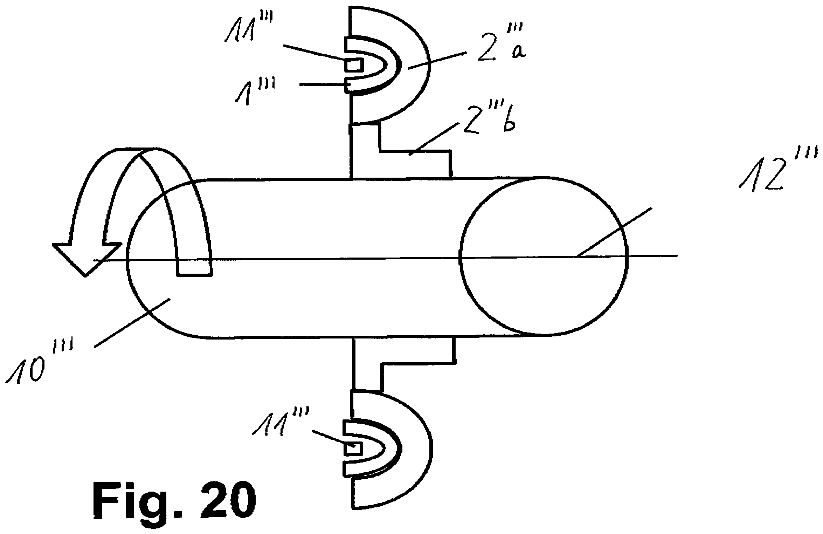

Fig. 20 zeigt eine Anordnung, umfassend eine rotierbare Welle 10'" und eine mit dieser drehfest verbundene Halteeinrichtung 2'"a, wobei die Halteeinrichtung 2'"a einen Ring 1'" aufweist, wobei der Ring 1'" koaxial zu der Welle 10'" angeordnet und mit dieser rotierbar ist und wobei ein Sensor 11'" vorgesehen ist, welcher die magnetischen Signale der Magnetfelder erfasst. Die Welle 10'" rotiert gemeinsam mit dem Ring 1'" um die Achse 12'". Der Sensor 11'" ist in einer Kuhle des im Querschnitt U-förmigen Rings 1'" aufgenommen bzw. ragt in diese hinein.

Die Halteeinrichtung 2"'a weist eine Nabe 2'"b auf, durch welche die Welle 10'" hindurch ragt. Die Nabe 2'"b ist auf die Welle 10'" aufgepresst. Die Halteeinrichtung 2"'a ist aus Blech gefertigt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Ring (1, 1', 1", 1'") zur Anordnung auf einem um eine Achse (12', 12'" rotierbaren Element, umfassend einen ringförmigen Grundkörper (2, 2', 2", 2'"), welcher einen Zentraldurchgang (3, 3', 3", 3'") umfängt, der in einer Ringebene (4, 4', 4", 4'") liegt, wobei der Grundkörper (2, 2', 2", 2'") mehrere magnetische Bereiche (5, 5', 5", 5'") aufweist, die am oder im Grundkörper (2, 2', 2", 2'") angeordnet sind und jeweils ein für sie charakteristisches Magnetfeld erzeugen, wobei jedes Magnetfeld relativ zur Ringebene eine radiale und eine axiale Magnetfeldkomponente (6'a, 6'b) aufweist, die sich zu einem Magnetfeldvektor (6, 6', 6", 6'") kombinieren, welcher jeweils unter einem bestimmten Winkel (7') gegen die Ringebene (4, 4', 4", 4'") geneigt ist, wobei sich die Winkel (7'), unter denen die Magnetfeldvektoren (6, 6', 6", 6'") gegen die Ringebene (4, 4', 4", 4'") geneigt sind, längs des Umfangs des Grundkörpers (2, 2', 2", 2'") ändern, wobei jedem Winkel (7') höchstens n definierte Drehwinkel (8') des Rings (1, 1', 1", 1'") zugeordnet sind, wobei n eine ganze Zahl ist, **dadurch gekennzeichnet, dass** der Ring (1, 1', 1", 1'") im Querschnitt betrachtet U-förmig ausgebildet ist.

2. Ring nach Anspruch 1, **dadurch gekennzeichnet, dass** sich die Winkel (7') kontinuierlich ändern.

3. Ring nach Anspruch 1 oder 2, **dadurch gekennzeichnet, dass** die magnetischen Bereiche (5, 5', 5", 5'") einander ringsum abfolgend angeordnet sind.

4. Ring nach einem der Ansprüche 1 bis 3, **dadurch gekennzeichnet, dass** die Magnetfeldvektoren (6, 6', 6", 6'") eine wendelförmige Ebene aufspannen.

5. Ring nach einem der Ansprüche 1 bis 4, **dadurch gekennzeichnet, dass** jedem Winkel (7') höchstens vier definierte Drehwinkel (8') des Rings (1, 1', 1", 1'") zugeordnet sind.

6. Ring nach einem der Ansprüche 1 bis 4, **dadurch gekennzeichnet, dass** jedem Winkel (7') genau ein einzelner definierter Drehwinkel (8') des Rings (1, 1', 1", 1'") relativ zu einem Bezugspunkt (9') zugeordnet ist.

7. Ring nach einem der Ansprüche 1 bis 6, **dadurch gekennzeichnet, dass** die Größen oder Intensitäten der radialen und der axialen Magnetfeldkomponenten (6'a, 6'b) entlang des Umfangs relativ zueinander phasenverschoben sind.

8. Ring nach einem der Ansprüche 1 bis 7, **dadurch gekennzeichnet, dass** der Grundkörper (2, 2', 2", 2'") ein Elastomer oder einen Thermoplasten aufweist.

9. Ring nach einem der Ansprüche 1 bis 8, **dadurch gekennzeichnet, dass** der Grundkörper (2, 2', 2", 2'") ein Metall aus weichmagnetischem oder nicht magnetischem Material aufweist.

10. Anordnung, umfassend eine rotierbare Welle (10',10") und eine mit dieser drehfest verbundene Halteeinrichtung (2'a, 2'"a), wobei die Halteeinrichtung (2'a, 2'"a) einen Ring (1, 1', 1", 1'") nach einem der voranstehenden Ansprüche aufweist, wobei der Ring (1, 1', 1", 1'") koaxial zu der Welle (10', 10'") angeordnet und mit dieser rotierbar ist und wobei ein Sensor (11', 1'") vorgesehen ist, welcher die magnetischen Signale der Magnetfelder erfasst.

## Claims

1. Ring (1, 1', 1", 1'") for arranging on an element that is rotatable about an axis (12', 12'"), comprising an annular basic body (2, 2', 2", 2'") which surrounds a central passage (3, 3', 3", 3'") which is located in a ring plane (4, 4', 4", 4'"), wherein the basic body (2, 2', 2", 2'") has a plurality of magnetic regions (5, 5', 5", 5'") which are arranged on or in the basic body (2, 2', 2", 2'") and each generate an inherently characteristic magnetic field, wherein each magnetic field has, relative to the ring plane, a radial and an axial magnetic field component (6'a, 6'b) which combine to form a magnetic field vector (6, 6', 6", 6'") which is inclined in each case at a particular angle (7') with respect to the ring plane (4, 4', 4", 4'"), wherein the angles (7') at which the magnetic field vectors (6, 6', 6", 6'") are inclined with respect to the ring plane (4, 4', 4", 4'") change along the circumference of the basic body (2, 2' , 2", 2'"), wherein at most n defined rotary angles (8') of the ring (1, 1', 1", 1'") are assigned to each angle (7'), wherein n is an integer, **characterized in that** the ring (1, 1', 1", 1"') is configured to be U-shaped when seen in cross section.

2. Ring according to Claim 1, **characterized in that** the angles (7') change continuously.

3. Ring according to Claim 1 or 2, **characterized in that** the magnetic regions (5, 5', 5", 5'") are arranged in succession around the ring.

4. Ring according to one of Claims 1 to 3, **characterized in that** the magnetic field vectors (6, 6', 6", 6'") define a helical plane.

5. Ring according to one of Claims 1 to 4, **characterized in that** at most four defined rotary angles (8') of the ring (1, 1', 1", 1'") are assigned to each angle (7').

6. Ring according to one of Claims 1 to 4, **characterized in that** precisely one defined rotary angle (8') of the ring (1, 1', 1", 1'") in relation to a reference point (9') is assigned to each angle (7').

7. Ring according to one of Claims 1 to 6, **characterized in that** the magnitudes or intensities of the radial and axial magnetic field components (6'a, 6'b) are phase-shifted in relation to one another along the circumference.

8. Ring according to one of Claims 1 to 7, **characterized in that** the basic body (2, 2', 2", 2'") has an elastomer or a thermoplastic.

9. Ring according to one of Claims 1 to 8, **characterized in that** the basic body (2, 2', 2", 2'") has a metal composed of soft-magnetic or nonmagnetic material.

10. Arrangement comprising a rotatable shaft (10', 10'") and a retaining device (2'a, 2'"a) connected thereto in a rotationally fixed manner, wherein the retaining device (2'a, 2'"a) has a ring (1, 1', 1", 1'") according to one of the preceding claims, wherein the ring (1, 1', 1", 1'") is arranged coaxially with the shaft (10', 10'") and is rotatable with the latter, and wherein a sensor (11', 11'") which senses the magnetic signals of the magnetic fields is provided.

## Revendications

1. Anneau (1, 1', 1", 1'") destiné à être disposé sur un élément pouvant tourner autour d'un axe (12', 12'"), comportant un corps de base annulaire (2, 2', 2", 2'"), lequel entoure un passage central (3, 3', 3", 3'") qui se situe dans un plan d'anneau (4, 4', 4", 4'"), le corps de base (2, 2', 2", 2'") comprenant plusieurs zones magnétiques (5, 5', 5", 5'") qui sont disposées sur ou dans le corps de base (2, 2', 2", 2'") et produisent respectivement un champ magnétique caractéristique pour celles-ci, chaque champ magnétique présentant une composante de champ magnétique radiale et une composante de champ magnétique axiale (6'a, 6'b) par rapport au plan d'anneau, lesquelles composantes se combinent pour former un vecteur de champ magnétique (6, 6', 6", 6'"), lequel est incliné respectivement suivant un angle déterminé (7') par rapport au plan d'anneau (4, 4', 4", 4'"), les angles (7') suivant lesquels les vecteurs de champ magnétique (6, 6', 6", 6'") sont inclinés par rapport au plan d'anneau (4, 4', 4", 4'") variant le long de la périphérie du corps de base (2, 2', 2", 2'"), au maximum n angles de rotation définis (8') de l'anneau (1, 1', 1", 1'") étant associés à chaque angle (7'), n étant un nombre entier, **caractérisé en ce que** l'anneau (1, 1', 1", 1'") est en forme de U en section transversale.

2. Anneau selon la revendication 1, **caractérisé en ce que** les angles (7') varient en continu.

3. Anneau selon la revendication 1 ou 2, **caractérisé en ce que** les zones magnétiques (5, 5', 5", 5'") sont disposées de manière successive sur le pourtour.

4. Anneau selon l'une des revendications 1 à 3, **caractérisé en ce que** les vecteurs de champ magnétique (6, 6', 6", 6'") forment un plan hélicoïdal.

5. Anneau selon l'une des revendications 1 à 4, **caractérisé en ce qu'**au maximum quatre angles de rotation définis (8') de l'anneau (1, 1', 1", 1'") sont associés à chaque angle (7').

6. Anneau selon l'une des revendications 1 à 4, **caractérisé en ce qu'**exactement un angle de rotation défini individuel (8') de l'anneau (1, 1', 1", 1'") par rapport à un point de référence (9') est associé à chaque angle (7').

7. Anneau selon l'une des revendications 1 à 6, **caractérisé en ce que** les amplitudes ou les intensités des composantes de champ magnétique radiales et des composantes de champ magnétique axiales (6'a, 6'b) sont déphasées les unes par rapport aux autres le long de la périphérie.

8. Anneau selon l'une des revendications 1 à 7, **caractérisé en ce que** le corps de base (2, 2', 2", 2'") comprend un élastomère ou une matière thermoplastique.

9. Anneau selon l'une des revendications 1 à 8, **caractérisé en ce que** le corps de base (2, 2', 2", 2'") comprend un métal constitué d'un matériau magnétique doux ou non magnétique.

10. Ensemble, comportant un arbre rotatif (10', 10") et un dispositif de retenue (2'a, 2'"a) relié de manière solidaire en rotation à celui-ci, le dispositif de retenue (2'a, 2'"a) comprenant un anneau (1, 1', 1", 1'") selon l'une des revendications précédentes, l'anneau (1, 1', 1", 1'") étant disposé de manière coaxiale par rapport à l'arbre (10', 10'") et pouvant tourner avec celui-ci, et un capteur (11', 11'") étant prévu, lequel détecte les signaux magnétiques des champs magnétiques.
